# EUROPÄISCHE PATENTSCHRIFT

(11) **EP 3 317 007 B1**
(45) Veröffentlichungstag und Bekanntmachung des Hinweises auf die Patenterteilung: **11.09.2019**
(21) Anmeldenummer: 16734248.4
(22) Anmeldetag: 27.06.2016
(51) Int. Cl.: B05C 1/10, A23G 3/02, B01J 2/26, B29B 9/10, B05C 1/00, B29B 13/04, B01J 2/20

(54) **VORRICHTUNG UND VERFAHREN ZUM VERTROPFEN EINES FLIESSFÄHIGEN PRODUKTS**
DEVICE AND METHOD FOR DRIPPING A FLOWABLE PRODUCT
DISPOSITIF ET PROCÉDÉ DE FORMATION DE GOUTTES À PARTIR D'UN PRODUIT FLUIDE

(30) Priorität: 01.07.2015 DE 102015212353
(43) Veröffentlichungstag der Anmeldung: 09.05.2018
(73) Patentinhaber: IPCO Germany GmbH, 70736 Fellbach (DE)
(72) Erfinder: ROTH, Bernhard, 71563 Affalterbach (DE)
(74) Vertreter: Patentanwälte Ruff, Wilhelm, Beier, Dauster & Partner mbB
(86) Internationale Anmeldenummer: PCT/EP2016/064777
(87) Internationale Veröffentlichungsnummer: WO 2017/001310

(56) Entgegenhaltungen:
- DE-B3-102008 010 351
- US-A- 2 653 350
- US-A- 5 770 235
- US-A1- 2005 158 416

## Beschreibung

Die Erfindung betrifft eine Vorrichtung zum Vertropfen eines fließfähigen Produkts mit einer Außentrommel, die drehbar auf einem Kern angeordnet ist und die auf ihrem Umfang mit mehreren Durchgangsöffnungen versehen ist, wobei in dem Kern ein in Längsrichtung des Kerns verlaufender Zuführkanal für das zu vertropfende Produkt und eine am Innenumfang der Außentrommel anliegende Verteilvorrichtung vorgesehen sind und wobei zwischen dem Zuführkanal und der Verteilvorrichtung über die Länge des Zuführkanals gesehen wenigstens ein Versorgungskanal vorgesehen ist.

Aus der US-Offenlegungsschrift US 2005/0158416 A1 ist eine Vorrichtung zum Vertropfen eines fließfähigen Produkts mit einer Außentrommel bekannt, die drehbar auf einem Kern angeordnet ist und die auf ihrem Umfang mit mehreren Durchgangsöffnungen versehen ist. In dem Kern ist ein in Längsrichtung des Kerns verlaufender Zuführkanal für das vertropfende Produkt vorgesehen und es ist eine am Innenumfang der Außentrommel anliegende Verteilvorrichtung vorgesehen. Zwischen dem Zuführkanal und der Verteilvorrichtung ist über die Länge des Zuführkanals gesehen wenigstens ein Versorgungskanal vorgesehen. In dem Versorgungskanal ist ein frei in den Versorgungskanal vorragendes Staublech vorgesehen, das den freien Querschnitt des Versorgungskanals verringert.

Mit der Erfindung sollen eine Vorrichtung und ein Verfahren zum Vertropfen eines fließfähigen Produkts hinsichtlich einer Flexibilität bei der Verarbeitung unterschiedlicher fließfähiger Produkte verbessert werden.

Erfindungsgemäß ist hierzu eine Vorrichtung mit den Merkmalen von Anspruch 1 und ein Verfahren mit den Merkmalen von Anspruch 15 vorgesehen. Zweckmäßige Weiterbildungen der Erfindung sind in den Unteransprüchen angegeben.

Erfindungsgemäß ist bei einer Vorrichtung zum Vertropfen eines fließfähigen Produkts mit einer Außentrommel, die drehbar auf einem Kern angeordnet ist und die auf ihrem Umfang mit mehreren Durchgangsöffnungen versehen ist, vorgesehen, dass in dem Kern ein in Längsrichtung des Kerns verlaufender Zuführkanal für das zu vertropfende Produkt und eine am Innenumfang der Außentrommel anliegende Verteilvorrichtung vorgesehen sind, wobei zwischen dem Zuführkanal und der Verteilvorrichtung über die Länge des Zuführkanals gesehen wenigstens ein Versorgungskanal vorgesehen ist und wobei ein Absperrorgan zum Einstellen eines freien Querschnitts des wenigstens einen Versorgungskanals oder wenigstens einer Auslassöffnung, von der der wenigstens eine Versorgungskanal ausgeht, vorgesehen ist.

Indem ein freier Querschnitt des wenigstens einen Versorgungskanals mittels des Absperrorgans eingestellt werden kann, kann die erfindungsgemäße Vorrichtung auf unterschiedliche zu vertropfende Produkte eingestellt bzw. optimiert werden. Bei konventionellen Vorrichtungen zum Vertropfen eines fließfähigen Produkts war es bisher immer erforderlich, die Vorrichtung zu zerlegen und beispielsweise eine als Düsenleiste ausgebildete Verteilvorrichtung abzuändern. Mit der erfindungsgemäßen Vorrichtung kann mittels des Absperrorgans ein Durchfluss durch den wenigstens einen Versorgungskanal und gegebenenfalls auch eine Veränderung des Durchflusses über die Länge des Versorgungskanals gesehen beziehungsweise über mehrere, in Längsrichtung hintereinander angeordnete Versorgungskanäle gesehen, eingestellt werden.

Die erfindungsgemäße Vorrichtung kann dadurch auf die Eigenschaften des zu vertropfenden fließfähigen Produkts hin optimiert werden, so dass die erzeugten Produkttropfen gleichmäßig und von sehr guter Qualität sind. Dabei kann mit der erfindungsgemäßen Vorrichtung vor allem erreicht werden, dass die Produkttropfen über die Länge der Außentrommel bzw. die Breite eines Kühlbands gleichmäßig groß sind. Mit einer erfindungsgemäßen Vorrichtung können beispielsweise Schmelzen vertropft werden, die dann auf einem umlaufenden Kühlband abgelegt werden und im Laufe des Transports auf diesem Kühlband erkalten und erstarren. Nach dem Erstarren werden die Pastillen vom Kühlband abgenommen und können verpackt oder weiter verarbeitet werden. Je nach Viskosität der zu vertropfenden Schmelze kann ein unterschiedlicher Durchfluss durch den Versorgungskanal bzw. die Versorgungskanäle und die Düsenleiste erforderlich sein. Indem mit der erfindungsgemäßen Vorrichtung ein Durchfluss bzw. ein freier Querschnitt des Versorgungskanals bzw. der Versorgungskanäle eingestellt werden kann, kann die erfindungsgemäße Vorrichtung auf ein zu vertropfendes fließfähiges Produkt hin optimiert werden, ohne die Vorrichtung hierzu zerlegen und andere Teile einbauen zu müssen.

Gemäß der Erfindung ist das Absperrorgan in montiertem Zustand der Vorrichtung beweglich angeordnet.

Dadurch kann ein freier Querschnitt des wenigstens einen Versorgungskanals eingestellt werden, ohne die erfindungsgemäße Vorrichtung zerlegen zu müssen. Gegebenenfalls kann das Absperrorgan sogar während des laufenden Betriebs der Vorrichtung verstellt werden. Eine manuelle Verstellung des Absperrorgans wird dabei bevorzugt, falls erforderlich oder gewünscht ist auch eine Verstellung mittels eines Aktors, beispielsweise eines Elektromotors, realisierbar.

In Weiterbildung der Erfindung ist das Absperrorgan drehbar oder verschiebbar angeordnet.

Drehbewegungen oder Verschiebebewegungen können vergleichsweise einfach realisiert werden und können für die gewünschte Einstellung eines freien Querschnitts des wenigstens einen Versorgungskanals oder wenigstens einer Auslaßöffnung, von der der wenigstens eine Versorgungskanal ausgeht, sorgen. In Weiterbildung der Erfindung ist das Absperrorgan innerhalb des Zuführkanals um eine zur Längsachse des Zuführkanals parallele Drehachse drehbar angeordnet.

Innerhalb des Zuführkanals steht für die Anordnung des Absperrorgans zum einen ausreichend Platz zur Verfügung, zum anderen muss der Kern der erfindungsgemäßen Vorrichtung nicht abgeändert werden, um ein Absperrorgan unterzubringen. Da der Kern von der rotierenden Außentrommel umgeben ist, ist eine Betätigung des Absperrorgans durch eine Drehbewegung um eine parallel zur Längsrichtung liegende Drehachse in überraschend einfacher Weise möglich. Ein Aktor zum Bewegen des Absperrorgans kann in Längsrichtung gesehen beispielsweise vor oder hinter der gelochten Außentrommel angeordnet werden.

In Weiterbildung der Erfindung erstreckt sich das Absperrorgan über die gesamte Länge eines Abschnitts des Zuführkanals, von dem der wenigstens eine Versorgungskanal ausgeht.

Auf diese Weise kann die gesamte Länge eines Versorgungskanals oder können mehrere Versorgungskanäle gleichzeitig mittels des Absperrorgans in ihrem freien Querschnitt verändert werden.

In Weiterbildung der Erfindung ist das Absperrorgan zylindrisch ausgebildet.

Auf diese Weise lässt sich das Absperrorgan vergleichsweise einfach und kostengünstig herstellen.

In Weiterbildung der Erfindung ist ein Außenumfang des Absperrorgans mit wenigstens einem Vorsprung versehen, wobei der Vorsprung zum wenigstens teilweisen Absperren von wenigstens einer Auslassöffnung im Zuführkanal vorgesehen ist, wobei der Versorgungskanal von der Auslassöffnung ausgeht. Durch Vorsehen von Vorsprüngen an dem Außenumfang des zylindrischen Absperrorgans können mehrere Versorgungskanäle punktgenau in ihrem freien Querschnitt eingestellt werden. Darüber hinaus ist die Lagerung des Absperrorgans im Zuführkanal erheblich erleichtert, da der Außenumfang des Absperrorgans nicht exakt passend zum Innenumfang des Zuführkanals ausgebildet werden muss. Beispielsweise können die Vorsprünge als Schraubenköpfe von Kunststoffschrauben ausgebildet sein. Dadurch wird zum einen das zylindrische Absperrorgan in einem vordefinierten Abstand zum Innenumfang des Zuführkanals gehalten und zum anderen können die Schraubenköpfe gleichzeitig als Gleitlager wirken. Bei Verschleiß lassen sich die Vorsprünge dann sehr einfach auswechseln.

In Weiterbildung der Erfindung sind mehrere Vorsprünge vorgesehen und die Vorsprünge sind über den Außenumfang des Absperrorgans in einer Weise verteilt, so dass zwischen einem Innenumfang des Zuführkanals und einem Außenumfang des Absperrorgans ein Ringraum gebildet ist. Über einen solchen Ringraum kann das zu vertropfende fließfähige Produkt dann zu dem wenigstens einen Versorgungskanal geführt werden.

In Weiterbildung der Erfindung ist das Absperrorgan als Rohr ausgebildet.

Rohre sind gegenüber Torsionsbeanspruchungen sehr steif und damit hochbelastbar und sind darüber hinaus kostengünstig herstellbar. Der Innenraum des Rohrs kann für eine Zuführung eines zu vertropfenden Produkts genutzt werden. Über Durchgangsöffnungen in dem Rohr kann das zu vertropfende Produkt dann in den Zuführkanal und dann letztendlich zur Düsenleiste gelangen.

In Weiterbildung der Erfindung ist das Rohr mit mehreren Durchgangsöffnungen versehen.

In Weiterbildung der Erfindung sind die Durchgangsöffnungen des Rohrs wenigstens teilweise etwa gegenüber dem wenigstens einen Vorsprung zum Absperren des wenigstens einen Versorgungskanals angeordnet.

Auf diese Weise ist ein Zustrom des zu vertropfenden Produkts zu dem wenigstens einen Versorgungskanal vergleichmäßigt. Denn das zu vertropfende Produkt wird über den Innenraum des rohrförmig ausgebildeten Absperrorgans zugeführt, tritt dann gegenüber dem Vorsprung oder den Vorsprüngen zum Absperren des Versorgungskanals bzw. der Versorgungskanäle aus und muss dann über den Ringraum zwischen dem Absperrorgan und dem Zuführkanal zu den Versorgungskanälen oder dem Versorgungskanal gelangen. Dadurch wird eine Art Labyrinth gebildet, das für einen gleichmäßigen Zustrom des zu vertropfenden Produkts sorgt.

In Weiterbildung der Erfindung sind mehrere Vorsprünge vorgesehen und die Vorsprünge sind in Längsrichtung des Absperrorgans gesehen nicht fluchtend zueinander angeordnet.

Auf diese Weise kann durch Verdrehen des Absperrorgans in einfacher Weise ein über die Länge des Zuführkanals gesehen unterschiedlicher freier Querschnitt der einzelnen Versorgungskanäle oder des Versorgungskanals eingestellt werden. Denn durch eine Verdrehung des Absperrorgans gelangen die Vorsprünge, abhängig von ihrer Position entlang der Länge des Absperrorgans, in jeweils eine Position, in der eine unterschiedliche Abdeckung des Versorgungskanals oder der Versorgungskanäle realisiert ist. Über die Länge des Absperrorgans gesehen kann somit der freie Querschnitt des Versorgungskanals oder der Versorgungskanäle variiert werden.

In Weiterbildung der Erfindung sind die Vorsprünge in Längsrichtung des Absperrorgans gesehen entlang einer schräg zur Längsrichtung verlaufenden Linie angeordnet. Zweckmäßigerweise nimmt ein Abstand der Vorsprünge von einer parallel zur Längsrichtung verlaufenden Linie in Zuführrichtung des zu vertropfenden Produkts im Zuführkanal zu.

Je weiter der Vorsprung also von einem Ende des Zuführkanals entfernt angeordnet ist, an dem das zu vertropfende Produkt zugeführt wird, desto weniger stark kann der freie Querschnitt des Versorgungskanals verengt werden. Dadurch können Reibungsverluste beim Durchströmen des Zuführkanals ausgeglichen werden und die Düsenleiste kann über ihre gesamte Länge mit einem gleichmäßigen Strom an zu vertropfendem Produkt beaufschlagt werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine schematische Schnittansicht einer erfindungsgemäßen Vorrichtung zum Vertropfen eines fließfähigen Produkts mit einer ersten Stellung eines Absperrorgans,
- Fig. 2: die Vorrichtung der Fig. 1 mit einer zweiten Stellung des Absperrorgans,
- Fig. 3: eine schematische, teilweise geschnittene Ansicht einer erfindungsgemäßen Vorrichtung in einer ersten Stellung des Absperrorgans,
- Fig. 4: die Vorrichtung der Fig. 3 in einer zweiten Stellung des Absperrorgans,
- Fig. 5: eine abschnittsweise Darstellung einer erfindungsgemäßen Vorrichtung in teilweise aufgeschnittenem Zustand von schräg oben,
- Fig. 6: eine Darstellung des Absperrorgans der Vorrichtung der Fig. 5 von schräg oben,
- Fig. 7: eine erste Schnittansicht des Absperrorgans der Fig. 6,
- Fig. 8: eine zweite Schnittansicht des Absperrorgans der Fig. 6,
- Fig. 9: eine schematische Seitenansicht des Absperrorgans der Fig. 6 aus einer ersten Blickrichtung,
- Fig. 10: eine schematische Seitenansicht des Absperrorgans der Fig. 6 aus einer zweiten Blickrichtung und
- Fig. 11: eine schematische Seitenansicht eines Absperrorgangs gemäß einer weiteren Ausführungsform der Erfindung.

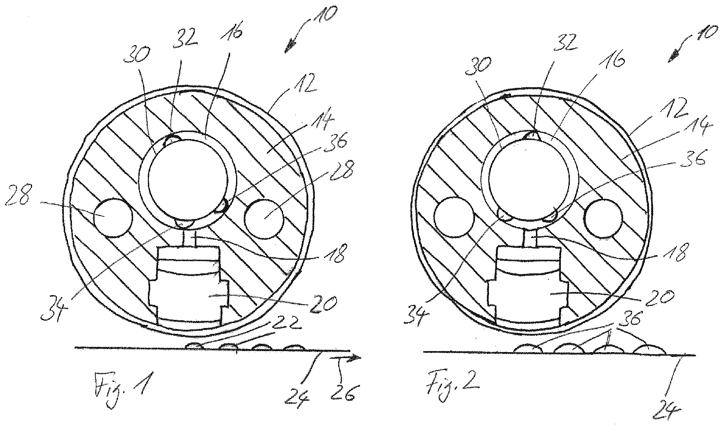

Die Darstellung der Fig. 1 zeigt eine schematische Schnittansicht einer erfindungsgemäßen Vorrichtung 10. Die Vorrichtung 10 ist dabei schematisch und lediglich abschnittsweise dargestellt. Die Vorrichtung 10 weist eine Außentrommel 12 auf, die mittels nicht dargestellter Antriebsvorrichtungen auf einem Kern 14 rotieren kann. Die Außentrommel 12 ist mit zahlreichen Durchgangsöffnungen versehen. Der Kern 14 ist mit einem kreiszylindrischen Zuführkanal 16 versehen, durch den ein zu vertropfendes Produkt, beispielsweise eine Produktschmelze, zugeführt wird. Ausgehend von dem Zuführkanal gelangt das zu vertropfende Produkt über einen Versorgungskanal 18 in den Bereich einer in Fig. 1 lediglich schematisch angedeuteten Verteilvorrichtung, die bei der dargestellten Ausführungsform als Düsenleiste 20 ausgebildet ist. Ausgehend von der Düsenleiste 20 wird das Produkt radial nach außen aus dem Kern herausgedrückt und wird dadurch auch durch die Durchgangsöffnungen in der im Betrieb relativ zum Kern 14 rotierenden Außentrommel gedrückt. Dadurch entstehen Produkttropfen 22, die dann auf einem umlaufenden Kühlband 24 abgelegt werden. Das Kühlband 24 läuft in Richtung des Pfeils 26 um zwei nicht dargestellte Trommeln um. Da der Kern 14 stillsteht, werden die Tropfen 22 immer unterhalb der Düsenleiste 20 auf dem Kühlband 24 abgelegt und durch die Bewegung des Kühlbands 24 in Richtung des Pfeils 26 abtransportiert. Im Laufe der Bewegung auf dem Kühlband 24 erstarren die Tropfen 22 zu Produktpastillen. Diese Pastillen werden dann vom Kühlband 24 abgenommen.

In dem Kern 14 sind zwei Heizkanäle 28 vorgesehen, die von einem geeigneten Heizmedium durchflossen werden und die dafür sorgen, dass der Kern 14 eine Temperatur einnimmt und behält, die verhindert, dass die Produktschmelze bzw. das zu vertropfende Produkt innerhalb des Zuführkanals 16, innerhalb des Versorgungskanals 18 oder innerhalb der Düsenleiste 20 erstarrt.

In der Schnittansicht der Fig. 1 ist lediglich ein Versorgungskanal 18 dargestellt. Der Versorgungskanal 18 kann entweder eine Schlitzform haben, die sich über die gesamte Länge der Düsenleiste 20 erstreckt. Zweckmäßigerweise sind aber mehrere Versorgungskanäle 18 nebeneinander vorgesehen, durch die das zu vertropfende Produkte dann in die Düsenleiste 20 gelangt.

Innerhalb des Zuführkanals 16 ist ein rohrförmiges Absperrorgan 30 vorgesehen, das auf seinem Außenumfang mit mehreren Vorsprüngen 32, 34 bzw. 36 versehen ist. Die Vorsprünge 32, 34, 36 sind jeweils ungefähr gleich hoch und sorgen dafür, dass zwischen dem rohrförmigen Absperrorgan 30 und dem Innenumfang des Zuführkanals 16 ein Ringraum gebildet ist. Ein zu vertropfendes Produkt wird durch den Innenraum des Absperrorgans 30 zugeführt, kann dann durch in Fig. 1 nicht dargestellte Durchgangsöffnungen in den Ringraum austreten und gelangt dann über den Ringraum in die Versorgungskanäle 18.

Das Absperrorgan 30 ist um seine Mittellängsachse drehbar. Eine Drehachse des Absperrorgans ist somit parallel zur Mittellängsachse des Zuführkanals 16 und fällt bei der Ausführungsform der Fig. 1 mit dieser zusammen. Die hierzu erforderlichen Antriebsvorrichtungen sind in Fig. 1 nicht dargestellt. In der Position der Fig. 1 verdeckt der Vorsprung 34 teilweise eine Auslassöffnung im Zuführkanal 16, von der dann der Versorgungskanal 18 ausgeht. Im Zustand der Fig. 1 ist der freie Querschnitt des Versorgungskanals 18 bzw. ein freier Querschnitt der Auslassöffnung daher verringert.

Fig. 2 zeigt eine schematische Schnittansicht der erfindungsgemäßen Vorrichtung 10 der Fig. 1, wobei im Unterschied zur Fig. 1 das Absperrorgan 30 eine andere Drehstellung einnimmt als in Fig. 1. Speziell ist das Absperrorgan 30 um seine Mittellängsachse geringfügig im Uhrzeigersinn verdreht worden. Der Vorsprung 34 liegt dadurch von der Auslassöffnung zum Versorgungskanal 18 entfernt auf dem Innenumfang des Zuführkanals 16 auf. Die Auslassöffnung in den Versorgungskanal 18 ist damit vollständig freigegeben. Gegenüber dem Zustand der Fig. 1 kann dadurch ein größerer Strom des zu vertropfenden fließfähigen Produkts in die Versorgungskanäle 18 gelangen.

Mittels einer Verdrehung des Absperrorgans 32 relativ zu den Auslassöffnungen zu den Versorgungskanälen 18 kann dadurch ein Volumenstrom des fließfähigen Produkts in die Versorgungskanäle 18 stufenlos eingestellt werden. Die Versorgungskanäle 18 können dabei, wie in Fig. 2 dargestellt ist, vollständig freigegeben werden, wie in Fig. 1 dargestellt ist, teilweise abgesperrt werden und in nicht dargestellter Weise sogar gänzlich verschlossen werden. Das Absperrorgan 30 wird bevorzugt manuell verdreht, ein motorischer Antrieb ist im Rahmen der Erfindung aber durchaus möglich.

Anhand der Fig. 2 ist schematisch dargestellt, dass nun ein größerer Volumenstrom durch die Versorgungskanäle 18 in die Düsenleiste 20 gelangt und infolgedessen auch die abgelegten Produkttropfen 36 größer sind als die Produkttropfen 22 der Fig. 1. Dass die Produkttropfen 36 in der Stellung des Absperrorgans 30 der Fig. 2 größer sind als die Produkttropfen 22 der Fig. 1 dient aber lediglich der Verdeutlichung. Beispielsweise könnte im Zustand der Fig. 2 auch die Außentrommel 12 schneller relativ zum Kern 14 rotieren, so dass dann die Tropfengröße wieder kleiner wäre.

Wesentlich für die Erfindung ist, dass der freie Querschnitt der Auslassöffnungen der Versorgungskanäle 18 bzw. ein Volumenstrom des fließfähigen Produkts durch die Versorgungskanäle 18 im Wesentlichen stufenlos eingestellt werden kann, ohne die Vorrichtung 10 stilllegen oder gar zerlegen zu müssen. Während des laufenden Betriebs ist dadurch eine Optimierung der Vorrichtung 10 auf das zu vertropfende Produkt möglich. Eine solche Optimierung wird beispielsweise dadurch vorgenommen, dass die ausgegebene Tropfengröße bzw. die Verteilung der Tropfengröße über die Breite des Kühlbands 24 optimiert wird. Idealerweise sind alle auf dem Kühlband 24 abgelegten Tropfen 22, 36 gleich groß.

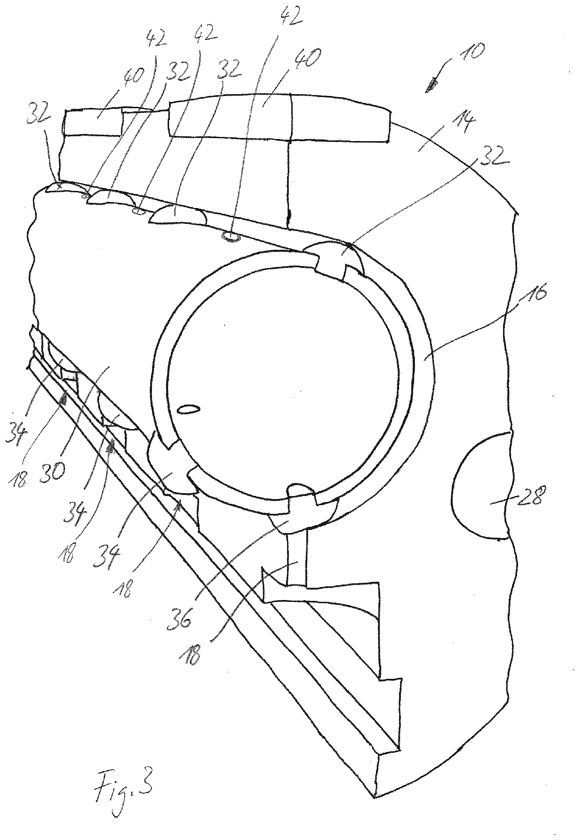

Die Darstellung der Fig. 3 zeigt eine abschnittsweise schematische Schnittansicht der Vorrichtung 10. Dargestellt ist lediglich der Kern 14 ohne die in Fig. 1 dargestellte Außentrommel 12. Der Übersichtlichkeit halber ist der Kern 14 sowohl quer als auch längs geschnitten. Der Kern 14 ist mit Gleitstücken 40 versehen, die an der Innenseite der Außentrommel 12 anliegen und einen geringen Abstand zwischen der Außentrommel 12 und dem Kern 14 sicherstellen. Mehrere Gleitstücke 40 sind in nicht dargestellter Weise über den Außenumfang des Kerns 14 verteilt.

Zu erkennen ist in Fig. 3 der Zuführkanal 16, in dem drehbar das rohrförmige Absperrorgan 30 aufgenommen ist. Zu erkennen ist, dass jeweils mehrere Vorsprünge 32, 34, 36 in Längsrichtung des Absperrorgans 30 hintereinander angeordnet sind. In dem Zustand der Fig. 3 verdecken die Vorsprünge 36 eine Auslassöffnung des Zuführkanals 18 annähernd vollständig. Es kann also nur ein sehr kleiner Volumenstrom des zu vertropfenden Produkts in die Versorgungskanäle 18 gelangen. In der Darstellung der Fig. 3 ist lediglich ein Versorgungskanal 18 und ein Vorsprung 36 zu erkennen, die übrigen Versorgungskanäle 18 und Vorsprünge 36 sind verdeckt.

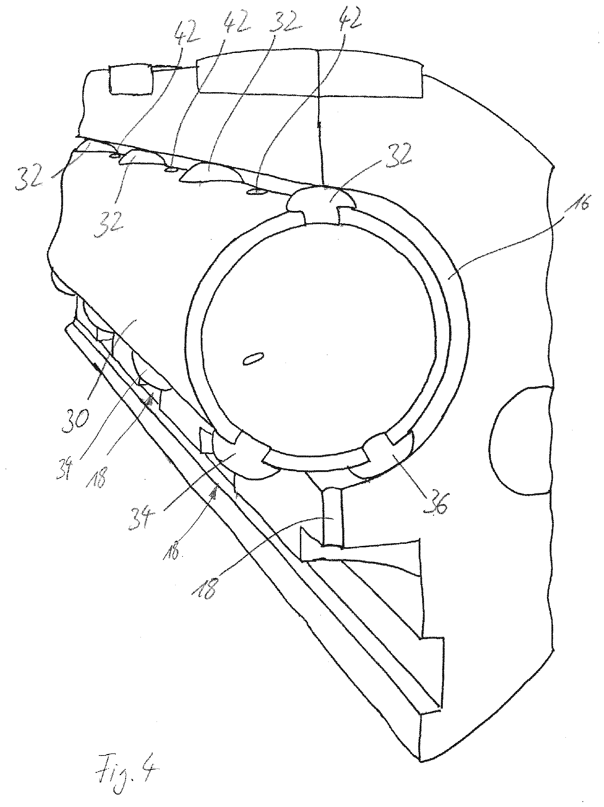

Um den Querschnitt der Versorgungskanäle 18 wieder freizugeben, kann das Absperrorgan 30 um seine Mittellängsachse verdreht werden. Ein solcher Zustand ist in Fig. 4 dargestellt. Eine Verdrehung des Absperrorgans 30 ist zwischen dem Zustand der Fig. 3 und dem Zustand der Fig. 4 entgegen dem Uhrzeigersinn erfolgt. Der Vorsprung 36 ist nun entfernt von der Auslassöffnung im Zuführkanal 16, von der der Versorgungskanal 18 ausgeht. Der Querschnitt dieser Auslassöffnung ist im Zustand der Fig. 4 somit vollständig freigegeben und das zu vertropfende, fließfähige Produkt kann den vollständigen Querschnitt des Versorgungskanals 18 nutzen. Im Vergleich zum Zustand der Fig. 3 gelangt dadurch ein deutlich größerer Volumenstrom des zu vertropfenden Produkts in die Düsenleiste 20.

Die Vorsprünge 32, 34, 36 ermöglichen gleichzeitig eine Drehbewegung des Absperrorgans 30 und sorgen für die Aufrechterhaltung eines Ringraums zwischen dem Innenumfang des Zuführkanals 16 und dem Außenumfang des Absperrorgans 30. Das zu vertropfende Produkt wird in axialer Richtung durch den Innenraum des rohrförmigen Absperrorgans 30 zugeführt und kann dann über Durchgangsöffnungen 42 in den Ringraum zwischen dem Absperrorgan 30 und dem Innenumfang des Zuführkanals 16 gelangen. Zwischen jeweils zwei Vorsprüngen 32 ist eine Durchgangsöffnung 42 angeordnet. Über die Länge des Absperrorgans gesehen kann damit eine pro Länge gleichmäßige Menge an zu vertropfendem Produkt in den Ringraum austreten. Das zu vertropfende Produkt verteilt sich dann in dem Ringraum zwischen Absperrorgan 30 und Innenumfang des Zuführkanals 16 und muss dann entlang dem Außenumfang des Absperrorgans 30 nach unten bis zu den Auslassöffnungen der Versorgungskanäle 18 strömen. Dadurch wird eine sehr gleichmäßige Verteilung innerhalb des Ringraums und damit auch innerhalb der Versorgungskanäle 18 erreicht.

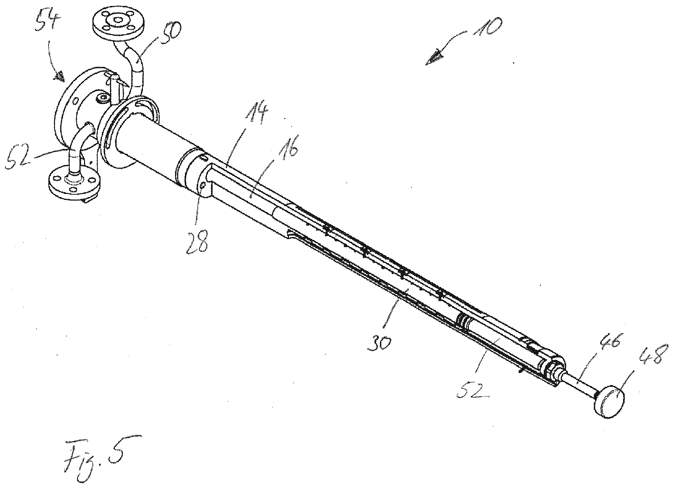

Die Darstellung der Fig. 5 zeigt die erfindungsgemäße Vorrichtung 10 teilweise, wobei der Kern 14 teilweise geschnitten dargestellt ist. Zu erkennen ist der Zuführkanal 16 innerhalb des Kerns 14, in den von dem in Fig. 5 rechten Ende des Kerns 14 das Absperrorgan 30 eingeführt ist. Das Absperrorgan 30 ist an seinem, in Fig. 5 rechten Ende an einen Abschnitt 52 gekoppelt, der wiederum eine Antriebsstange 46 gekoppelt ist, die mittels eines Aktors, beispielsweise eines Getriebemotors 48, in und entgegen dem Uhrzeigersinn verdreht werden kann.

Leitungen 50, 52 dienen zum Zuführen bzw. Abführen eines Heizmediums, das dann in den Kanälen 28 im Kern 14 strömt. Zu vertropfendes Medium, beispielsweise eine Produktschmelze, wird axial in den Kern 14 über eine in Fig. 5 nicht erkennbare Zuführöffnung 54 zugeführt.

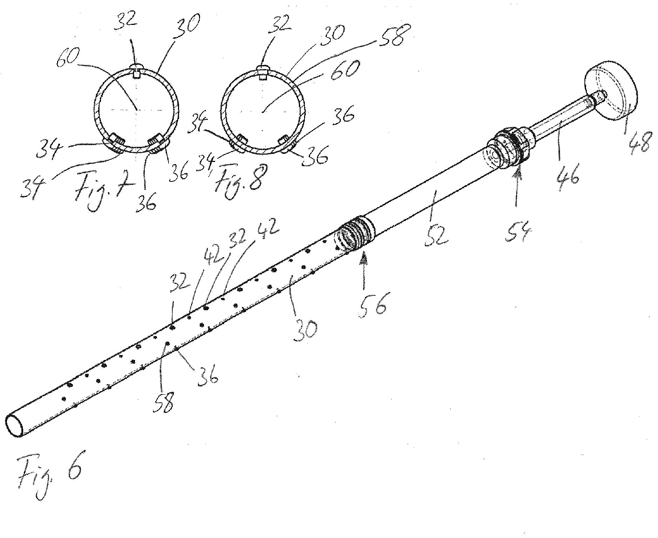

Die Darstellung der Fig. 6 zeigt das Absperrorgan 30, die Antriebsstange 46 und den Getriebemotor 48 von schräg oben. Zwischen der Antriebsstange 46 und dem mit den Vorsprüngen 32, 34, 36 versehenen Absperrorgan 30 ist der Abschnitt 52 vorgesehen, der lediglich eine Verbindungsfunktion hat und als glattes Rohr ausgebildet ist. Zwischen der Antriebsstange 56 und dem Abschnitt 52 ist eine erste Kupplung 54 und zwischen dem Abschnitt 52 und dem Absperrorgan 30 ist eine zweite Kupplung 56 vorgesehen. Die Kupplungen 54, 56 sind jeweils in Drehrichtung steif ausgeführt, um eine präzise Verdrehung des Absperrorgans 30 zu ermöglichen.

In der Darstellung der Fig. 6 sind die Durchgangsöffnungen 42 zu erkennen, die jeweils zwischen zwei Vorsprüngen 32 angeordnet sind. Weitere Durchgangsöffnungen 58 sind am Absperrorgan 30 angeordnet und seitlich versetzt zu den Durchgangsöffnungen 42. Anordnung und Anzahl der Durchgangsöffnungen 42, 58 kann auf die Viskosität des zu vertropfenden Produkts abgestimmt werden, wie auch deren Durchmesser.

Die Darstellung der Fig. 7 zeigt eine erste Schnittansicht des Absperrorgans 30 in dessen Längsrichtung. Zu erkennen ist, dass die Vorsprünge 32, 34 und 36 jeweils als Kunststoffschrauben ausgebildet sind, die in passende Gewindebohrungen im Absperrorgan 30 eingedreht sind. Dadurch lassen sich die Vorsprünge 32, 34, 36 zum einen leicht und sicher montieren, zum anderen auch in sehr einfacher Weise auswechseln, wenn sie verschlissen sind.

Fig. 7 ist auch zu entnehmen, dass die Vorsprünge 32 in Richtung einer Mittellängsachse 60 des Absperrorgans 30 fluchten, also exakt hintereinander angeordnet sind. Dies ist bei den Vorsprüngen 34 und 36 nicht der Fall. Vielmehr verringert sich in Blickrichtung der Fig. 7 ein Abstand zwischen den Vorsprüngen 34 und den Vorsprüngen 36 kontinuierlich.

Fig. 8 zeigt eine weitere Schnittansicht des Absperrorgans 30, wobei eine Blickrichtung entgegengesetzt zu der Blickrichtung der Fig. 7 ist. In dieser Blickrichtung vergrößert sich ein Abstand zwischen den Vorsprüngen 34 und den Vorsprüngen 36, je weiter die Vorsprünge von der Schnittebene bzw. dem Betrachter entfernt sind. Die Vorsprünge 34 und 36 sind somit nicht in Bezug auf die Mittellängsachse 60 fluchtend hintereinander angeordnet, sondern jeweils entlang einer schrägen Linie angeordnet, wobei sich der Abstand dieser beiden Linien vergrößert bzw., je nach Blickrichtung, verringert.

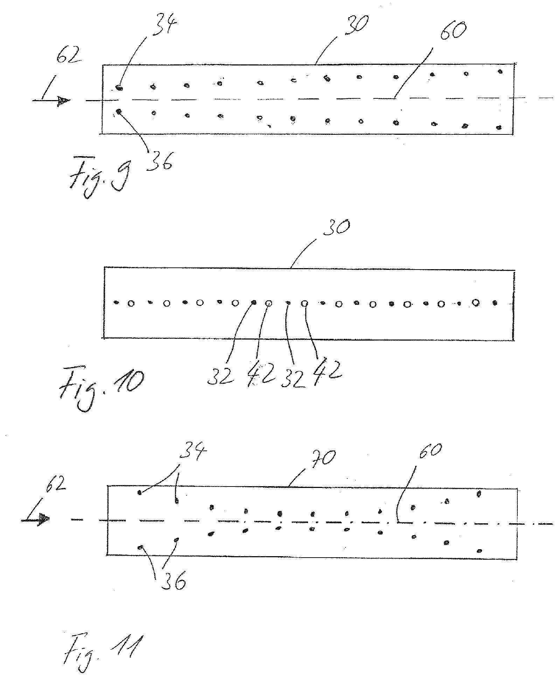

Fig. 9 zeigt eine Seitenansicht des Absperrorgans 30 in schematischer Darstellung zur Verdeutlichung der Anordnung der Vorsprünge 34 und 36. Ein Pfeil 62 in Fig. 9 zeigt eine Zuführrichtung des zu vertropfenden Produkts. Es ist zu erkennen, dass ein Abstand zwischen den Vorsprüngen 34 und den Vorsprüngen 36 in Zuführrichtung 62 des zu vertropfenden Produkts zunimmt. Eine solche Anordnung kann dazu vorgesehen sein, um die in Richtung der Mittellängsachse 60 exakt fluchtenden Versorgungskanäle unterschiedlich stark abzusperren. Bei der dargestellten Ausführungsform der Fig. 9 können die Zuführkanäle so weniger stark abgesperrt werden, je weiter sie in Bezug auf die Zuführrichtung 62 stromabwärts liegen. Eine solche Ausgestaltung kann gewählt werden, um über die Länge des Zuführkanals 16 eine möglichst gleichmäßige Einströmung in die Versorgungskanäle 18 sicherzustellen.

Fig. 10 zeigt eine weitere schematische Seitenansicht des Absperrorgans 30, wobei die Blickrichtung in Fig. 7 von oben auf die Vorsprünge 32 und die jeweils zwischen zwei Vorsprüngen 32 angeordneten Durchgangsöffnungen 42 geht.

Fig. 11 zeigt eine Seitenansicht eines Absperrorgans 70 einer weiteren Ausführungsform der Erfindung in schematischer Darstellung. Bei dem Absperrorgan 70 sind die Vorsprünge 34, 36 ebenfalls nicht in Richtung der Mittellängsachse 60 fluchtend angeordnet. Die Vorsprünge 34 sind auf einem Abschnitt eines Kreisbogens auf der Oberfläche des Absperrorgans 70 angeordnet. Symmetrisch zur Mittellängsachse 60 sind auch die Vorsprünge 36 auf einem Abschnitt eines Kreisbogens angeordnet. In Richtung des Pfeiles 62, der wieder die Zuführrichtung des zu vertropfenden Produkts zeigt, ist der Abstand der Vorsprünge 34, 36 zunächst groß, verringert sich dann bis auf ein Minimum auf der Hälfte der Länge des Absperrorgans 70 und steigt dann wieder auf den Ursprungswert an. Die beiden gedachten Kreisbogenlinien, auf denen die Vorsprünge 34, 36 angeordnet sind, liegen sich somit mit ihren konvexen Seiten gegenüber. Mit einer solchen Anordnung der Vorsprünge 34, 36 ist es beispielsweise möglich, lediglich die ganz außen, also in der Darstellung der Fig. 11 links bzw. rechts liegenden Durchflussöffnungen abzusperren, wohingegen die in der Mitte liegenden Durchflussöffnungen noch vollständig geöffnet sind. Auch die umgekehrte Anwendung ist möglich, dass also die ganz links bzw. rechts liegenden Durchflussöffnungen offen bleiben, wohingegen die in der Mitte liegenden Durchflussöffnungen wenigstens teilweise abgesperrt werden.

Je nach dem Fließverhalten des zu vertropfenden Produkts kann durch eine solche Anordnung der Vorsprünge 34, 36 damit eine sehr gleichmäßige Tropfengröße über die gesamte Länge des Tropfenformers erreicht werden.

## Patentansprüche

1. Vorrichtung zum Vertropfen eines fließfähigen Produkts mit einer Außentrommel (12), die drehbar auf einem Kern (14) angeordnet ist und die auf ihrem Umfang mit mehreren Durchgangsöffnungen versehen ist, wobei in dem Kern (14) ein in Längsrichtung des Kerns (14) verlaufender Zuführkanal (16) für das zu vertropfende Produkt und eine am Innenumfang der Außentrommel (12) anliegende Verteilvorrichtung (20) vorgesehen sind und wobei zwischen dem Zuführkanal (16) und der Verteilvorrichtung (20) über die Länge des Zuführkanals (16) gesehen wenigstens ein Versorgungskanal (18) vorgesehen ist, **dadurch gekennzeichnet, dass** ein Absperrorgan (30) zum Einstellen eines freien Querschnitts des wenigstens einen Versorgungskanals (18) oder wenigstens einer Auslassöffnung, von der der wenigstens eine Versorgungskanal (18) ausgeht, vorgesehen ist und
dass das Absperrorgan (30) im montierten Zustand der Vorrichtung (10) beweglich angeordnet ist.

2. Vorrichtung nach Anspruch 1, **dadurch gekennzeichnet, dass** das Absperrorgan innerhalb des Zuführkanals (16) drehbar oder verschiebbar ist.

3. Vorrichtung nach einem der vorstehenden Ansprüche, **dadurch gekennzeichnet, dass** das Absperrorgan (30) innerhalb des Zuführkanals (16) um eine parallel zur Mittellängsachse des Zuführkanals angeordnete Drehachse drehbar angeordnet ist.

4. Vorrichtung nach einem der vorstehenden Ansprüche, **dadurch gekennzeichnet, dass** das Absperrorgan (30) sich über die gesamte Länge eines Abschnitts des Zuführkanals (16) erstreckt, von dem der wenigstens eine Versorgungskanal (18) ausgeht.

5. Vorrichtung nach einem der vorstehenden Ansprüche, **dadurch gekennzeichnet, dass** das Absperrorgan (30) zylindrisch ausgebildet ist.

6. Vorrichtung nach Anspruch 5, **dadurch gekennzeichnet, dass** ein Außenumfang des Absperrorgans (30) mit wenigstens einem Vorsprung (32, 34, 36) versehen ist, wobei der Vorsprung (32, 34, 36) zum wenigstens teilweisen Absperren von wenigstens einer Auslassöffnung im Zuführkanal (16) vorgesehen ist, wobei der Versorgungskanal (18) von der Auslassöffnung ausgeht.

7. Vorrichtung nach Anspruch 6, **dadurch gekennzeichnet, dass** die Vorsprünge (32, 34, 36) über den Außenumfang des Absperrorgans (30) in einer Weise verteilt sind, so dass zwischen einem Innenumfang des Zuführkanals (16) und einem Außenumfang des Absperrorgans (30) ein Ringraum gebildet ist.

8. Vorrichtung nach Anspruch 5, 6 oder 7, **dadurch gekennzeichnet, dass** das Absperrorgan (30) als Rohr ausgebildet ist.

9. Vorrichtung nach Anspruch 8, **dadurch gekennzeichnet, dass** das Rohr mit mehreren Durchgangsöffnungen (42, 58) versehen ist.

10. Vorrichtung nach Anspruch 9, **dadurch gekennzeichnet, dass** die Durchgangsöffnungen (42) des Rohres wenigstens teilweise etwa gegenüber dem wenigstens einen Vorsprung (34, 36) zum Absperren des wenigstens einen Versorgungskanals (18) angeordnet sind.

11. Vorrichtung nach wenigstens einem der vorstehenden Ansprüche, **dadurch gekennzeichnet, dass** mehrere Vorsprünge (34, 36) vorgesehen sind und dass die Vorsprünge (34, 36) in Längsrichtung des Absperrorgans (30) gesehen nicht fluchtend zueinander angeordnet sind.

12. Vorrichtung nach Anspruch 11, **dadurch gekennzeichnet, dass** die Vorsprünge (34, 36) in Längsrichtung des Absperrorgans (30) gesehen entlang einer schräg zur Längsrichtung verlaufenden Linie angeordnet sind.

13. Vorrichtung nach Anspruch 12, **dadurch gekennzeichnet, dass** ein Abstand der Vorsprünge (34, 36) von einer parallel zur Längsrichtung verlaufenden Linie in Zuführrichtung (62) des zu vertropfenden Produkts im Zuführkanal (16) zunimmt.

14. Vorrichtung nach Anspruch 12, **dadurch gekennzeichnet, dass** die Vorsprünge (34, 36) entlang einer gekrümmten Linie, insbesondere einem Kreisbogenabschnitt, angeordnet sind.

15. Verfahren zum Vertropfen eines fließfähigen Produkts mit einer Vorrichtung nach einem der vorstehenden Ansprüche, **gekennzeichnet durch** Einstellen einer gleichmäßigen Tropfengröße über die Länge der Außentrommel gesehen mittels Bewegen des Absperrorgans (30) relativ zu dem wenigstens einen Versorgungskanal (18).

## Claims

1. A device for dropletizing a flowable product, having an outer drum (12), which is arranged in a rotatable manner on a core (14) and is provided with a plurality of through-openings in its circumference, wherein a feed duct (16) for the product to be dropletized, said feed duct (16) extending in the longitudinal direction of the core (14), and a distribution device (20) bearing against the inner circumference of the outer drum (12) are provided in the core (14), and wherein at least one supply duct (18) is provided between the feed duct (16) and the distribution device (20) along the length of the feed duct (16), **characterized in that** a shut-off member (30) for setting a free cross section of the at least one supply duct (18) or of at least one outlet opening, from which the at least one supply duct (18) proceeds, is provided, and
**in that** the shut-off member (30) is arranged in a movable manner in the assembled state of the device (10).

2. The device as claimed in claim 1, **characterized in that** the shut-off member is rotatable or displaceable within the feed duct (16).

3. The device as claimed in one of the preceding claims, **characterized in that** the shut-off member (30) is arranged within the feed duct (16) so as to be rotatable about an axis of rotation arranged parallel to the longitudinal center axis of the feed duct.

4. The device as claimed in one of the preceding claims, **characterized in that** the shut-off member (30) extends along the entire length of a portion of the feed duct (16), from which the at least one supply duct (18) proceeds.

5. The device as claimed in one of the preceding claims, **characterized in that** the shut-off member (30) is configured in a cylindrical manner.

6. The device as claimed in claim 5, **characterized in that** an outer circumference of the shut-off member (30) is provided with at least one protrusion (32, 34, 36), wherein the protrusion (32, 34, 36) is provided to at least partially shut off at least one outlet opening in the feed duct (16), wherein the supply duct (18) proceeds from the outlet opening.

7. The device as claimed in claim 6, **characterized in that** the protrusions (32, 34, 36) are distributed around the outer circumference of the shut-off member (30) in such a way that an annular gap is formed between an inner circumference of the feed duct (16) and an outer circumference of the shut-off member (30).

8. The device as claimed in claim 5, 6 or 7, **characterized in that** the shut-off member (30) is configured as a tube.

9. The device as claimed in claim 8, **characterized in that** the tube is provided with a plurality of through-openings (42, 58).

10. The device as claimed in claim 9, **characterized in that** the through-openings (42) in the tube are arranged at least partially approximately opposite the at least one protrusion (34, 36) for shutting off the at least one supply duct (18).

11. The device as claimed in at least one of the preceding claims, **characterized in that** a plurality of protrusions (34, 36) are provided, and **in that** the protrusions (34, 36) are arranged in a manner not aligned with one another in the longitudinal direction of the shut-off member (30).

12. The device as claimed in claim 11, **characterized in that** the protrusions (34, 36) are arranged along a line extending obliquely with respect to the longitudinal direction, as seen in the longitudinal direction of the shut-off member (30).

13. The device as claimed in claim 12, **characterized in that** a distance of the protrusions (34, 36) from a line, extending parallel to the longitudinal direction, increases in the feeding direction (62) of the product to be dropletized in the feed duct (16).

14. The device as claimed in claim 12, **characterized in that** the protrusions (34, 36) are arranged along a curved line, in particular a circular arc segment.

15. A method for dropletizing a flowable product with a device as claimed in one of the preceding claims, **characterized by** setting a uniform droplet size along the length of the outer drum by means of moving the shut-off member (30) relative to the at least one supply duct (18).

## Revendications

1. Dispositif de formation de gouttes à partir d'un produit fluide, comprenant un tambour extérieur (12) qui est disposé de manière rotative sur une partie centrale (14) et qui est doté, sur sa périphérie, de plusieurs ouvertures traversantes, dans lequel un conduit d'amenée (16) pour le produit à mettre sous forme de gouttes s'étendant dans la direction longitudinale de la partie centrale (14) et un dispositif de distribution (20) s'appliquant contre la périphérie intérieure du tambour extérieur (12) sont prévus dans la partie centrale (14), et dans lequel au moins un conduit d'alimentation (18) est prévu entre le conduit d'amenée (16) et le dispositif de distribution (20), vu sur la longueur du conduit d'amenée (16), **caractérisé en ce qu'**un organe d'arrêt (30) servant à régler une section transversale libre dudit au moins un conduit d'alimentation (18) ou d'au moins une ouverture de sortie à partir de laquelle part ledit au moins un conduit d'alimentation (18) est prévu et
**en ce que** l'organe d'arrêt (30) est disposé de manière mobile à l'état monté du dispositif (10).

2. Dispositif selon la revendication 1, **caractérisé en ce que** l'organe d'arrêt est rotatif ou déplaçable à l'intérieur du conduit d'amenée (16).

3. Dispositif selon l'une des revendications précédentes, **caractérisé en ce que** l'organe d'arrêt (30) est disposé à l'intérieur du conduit d'amenée (16) de manière rotative autour d'un axe de rotation disposé parallèlement à l'axe longitudinal médian du conduit d'amenée.

4. Dispositif selon l'une des revendications précédentes, **caractérisé en ce que** l'organe d'arrêt (30) s'étend sur toute la longueur d'une partie du conduit d'amenée (16) à partir de laquelle part ledit au moins un conduit d'alimentation (18).

5. Dispositif selon l'une des revendications précédentes, **caractérisé en ce que** l'organe d'arrêt (30) est de forme cylindrique.

6. Dispositif selon la revendication 5, **caractérisé en ce qu'**une périphérie extérieure de l'organe d'arrêt (30) est dotée d'au moins une saillie (32, 34, 36), la saillie (32, 34, 36) étant destinée à bloquer au moins partiellement au moins une ouverture de sortie dans le conduit d'amenée (16), le conduit d'alimentation (18) partant de l'ouverture de sortie.

7. Dispositif selon la revendication 6, **caractérisé en ce que** les saillies (32, 34, 36) sont distribuées sur la périphérie extérieure de l'organe d'arrêt (30) d'une manière telle qu'un espace annulaire soit formé entre une périphérie intérieure du conduit d'amenée (16) et une périphérie extérieure de l'organe d'arrêt (30).

8. Dispositif selon la revendication 5, 6 ou 7, **caractérisé en ce que** l'organe d'arrêt (30) est réalisé sous forme de tube.

9. Dispositif selon la revendication 8, **caractérisé en ce que** le tube est doté de plusieurs ouvertures traversantes (42, 58).

10. Dispositif selon la revendication 9, **caractérisé en ce que** les ouvertures traversantes (42) du tube sont disposées au moins partiellement approximativement en regard de ladite au moins une saillie (34, 36) servant à bloquer ledit au moins un conduit d'alimentation (18).

11. Dispositif selon au moins l'une des revendications précédentes, **caractérisé en ce que** plusieurs saillies (34, 36) sont prévues, et **en ce que** les saillies (34, 36) ne sont pas disposées de manière alignée les unes par rapport aux autres vues dans la direction longitudinale de l'organe d'arrêt (30).

12. Dispositif selon la revendication 11, **caractérisé en ce que** les saillies (34, 36) sont disposées le long d'une ligne s'étendant de manière inclinée par rapport à la direction longitudinale, vues dans la direction longitudinale de l'organe d'arrêt (30).

13. Dispositif selon la revendication 12, **caractérisé en ce qu'**une distance des saillies (34, 36) à une ligne s'étendant parallèlement à la direction longitudinale augmente dans le sens d'amenée (62) du produit à mettre sous forme de gouttes dans le conduit d'amenée (16).

14. Dispositif selon la revendication 12, **caractérisé en ce que** les saillies (34, 36) sont disposées le long d'une ligne courbe, en particulier le long d'un segment d'arc de cercle.

15. Procédé de formation de gouttes à partir d'un produit fluide à l'aide d'un dispositif selon l'une des revendications précédentes, **caractérisé par** le réglage d'une taille de gouttes uniforme, vue sur la longueur du tambour extérieur, par déplacement de l'organe d'arrêt (30) par rapport audit au moins un conduit d'alimentation (18).
